# EUROPEAN PATENT SPECIFICATION

(11) **EP 0 431 673 B1**
(45) Date of publication and mention of the grant of the patent: **21.07.1993**
(21) Application number: 90203110.3
(22) Date of filing: 23.11.1990
(51) Int. Cl.: B62D 61/12, B60G 11/46

(54) **Axle lifting device for a vehicle with gas spring system**
Achshebevorrichtung für ein Fahrzeug mit pneumatischem Aufhängesystem
Dispositif de levage d'un essieu pour un système de suspension pneumatique de véhicule

(30) Priority: 05.12.1989 NL 8902995
(43) Date of publication of application: 12.06.1991
(73) Proprietor: WEWELER N.V., NL-7332 AP Apeldoorn (NL)
(72) Inventor: Zantinge, Johan Michiel, 6991 TX Rheden (NL)
(74) Representative: de Bruijn, Leendert C.

(56) References cited:
- EP-A- 0 284 572
- EP-A- 0 332 037
- DE-U- 8 901 014
- US-A- 4 763 923
- US-A- 4 773 670

## Description

The invention relates to an axle lifting device for a vehicle, having a bearing arm for the axle running from a spring carrier bracket to the axle, and a gas spring system between axle or bearing arm and frame in which a fixed support is fitted under said bearing arm on the spring carrier bracket, on which support a gas bellows is arranged which at the other side presses from below onto the bearing arm or a part firmly fixed thereto, in order to lift the axle when gas pressure is supplied to said gas bellows and the above-mentioned gas spring system is released.

Such an axle lifting device is known from US-A-4.773.670. Therein the gas bellows is rigidly connected with its bottom plate to the fixed support and with its top plate to part of the bearing arm.

This known system has the disadvantage that it is not suitable for use with bearing arms which themselves have to contribute to the spring action as, for example, parabolical springs. This is so because such gas bellows normally have hardly any transverse rigidity, so that its top and bottom surfaces have to be connected to parts which fix these surfaces sufficiently in the horizontal direction. If, however, the bearing arm is such that it is desirable to avoid damage to the surface, drilling holes therein etc., for example in the case of bearing arms in the form of parabolic springs with the surface treated by grit or shot blasting and/or metal spraying, the connection of such axle lifting gas bellows to the bearing arm constitutes a problem.

The invention aims at providing a good solution for this problem, which is simple in design and reliable in operation.

To this end, a device as given in the preamble is, according to the invention, characterized in that there is a restraining arm connecting the upper end of the gas bellows to the bearing arm, the axle or the spring carrier bracket in a point at a horizontal distance from said bellows so as to allow extension of the gas bellows while limiting horizontal movements of the upper end of the gas bellows.

This gives the possibility to avoid a direct connection taking up lateral forces between the top of the gas bellows and the bearing arm, so that no holes have to be drilled therein and no other damaging or interrupting of its smooth surface is necessary.

If desired, there may still be a connection between the top of the gas bellows and this bearing arm, e.g. for ascertaining common vertical movements while allowing some sliding movement of the top of the bellows with respect to this arm, e.g. by straps around this arm, which do not require any holes or other deformations to be made in the surface of the bearing arm.

It is, however, preferred when applying the invention not to use such a connection at all, but to provide the rigid plate forming the top surface of said gas bellows with one or more elastic pads, by means of which the gas bellows pushes from below onto the bearing arm, said restraining arm being rigidly connected to or forming part of said rigid plate.

The elastic pad or pads give a good adaptation to deformations of the bearing arm if the latter itself is designed in such a way that it contributes to the roll stabilisation or the spring action and can thus deform elastically.

On the other hand, the invention is also profitable if the bearing arm is rigid, as also in that case it may be preferable to give it a very smooth surface without any interruptions.

With the use of the invention, it is possible, if space distribution makes this desirable, to place the gas spring bellows for the axle lifting if desired with its central axis at a short distance outside the centre of the bearing arm.

The invention will now be explained in greater detail with reference to appended drawings, showing only by way of example two embodiments of axle lifting devices according to the invention. In the drawings:
Fig. 1 shows a side view, partially cross-section, of an axle suspension with lifting device in a first embodiment;
Fig. 2 is a side view of such a device in a second embodiment, shown rather more schematically;
Fig. 3 is a partial side view of the device of Fig. 2 in the lowest position of the axle;
Fig. 4 is a partial side view of the device of Figs. 2 and 3 in the raised axle position; and
Fig. 5 is an exploded perspective view of the top side of the axle lifting gas bellows of the device according to the preceding figures.

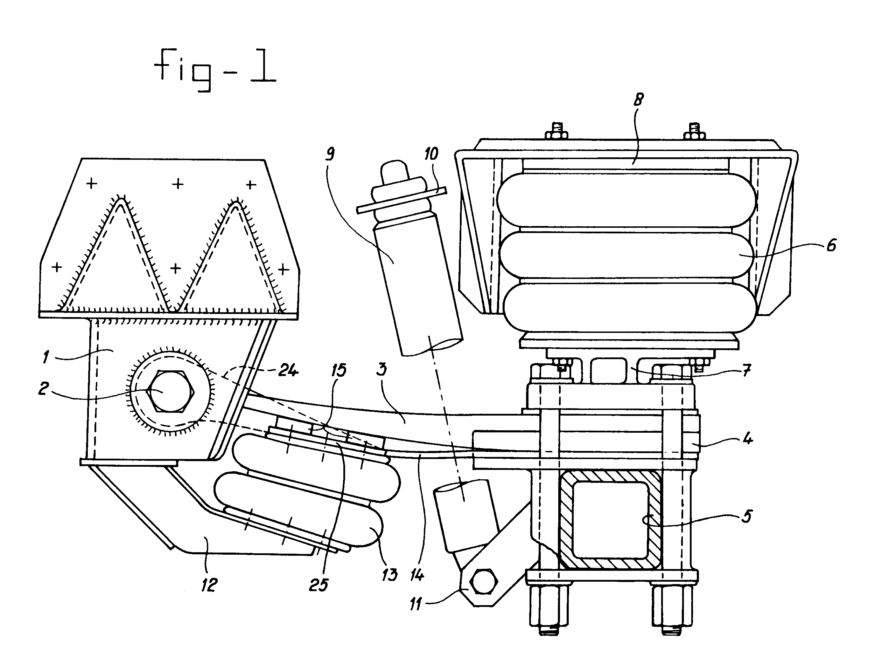

In Fig. 1 a spring carrier bracket 1 fixed on a vehicle frame bears a pivot pin 2, on which a bearing arm 3 engages hingedly in a known manner, for example with the usual rubber bearing cushion. The arm 3 is secured at the other end at 4 on an axle 5, in the form of a hollow tube on which one or more wheels are fitted at both ends. Between the pivot at 2 and the securing at 4 on the axle the bearing arm 3 is in the form of a parabolic leaf spring changing in thickness, and becoming thicker towards the axle. A gas spring bellows 6 lies above the bearing arm 3 in the part 4, directly above it or on a raised part 7, and the top end 8 thereof is fixed to the vehicle frame. A shock absorber 9 connects the frame at 10 to a part 11 on the axle.

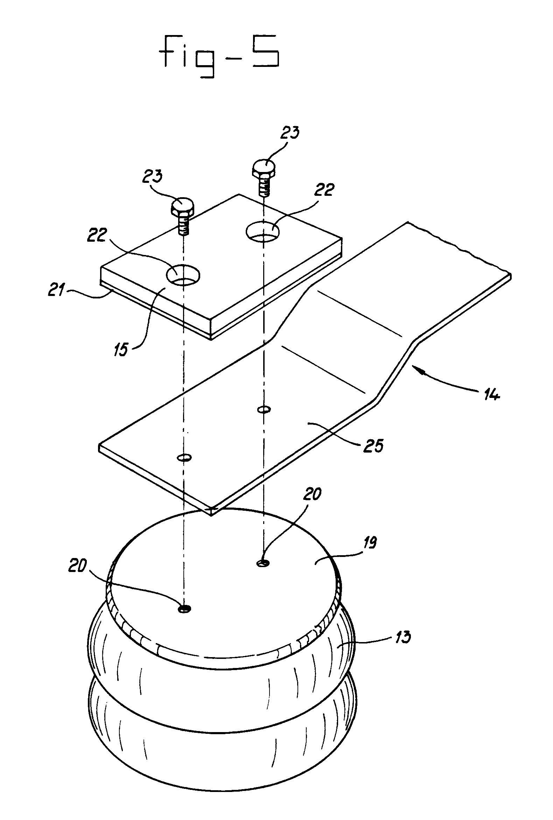

A supporting arm 12 is fixed at the bottom of the spring carrier bracket 1, and it bears on its top face sloping slightly towards the axle a gas bellows 13, of which the bottom plate is fixed firmly to said supporting arm 12. Said bellows 13 rests at the top against the bottom of the bearing arm 3 with means to be described in greater detail with reference to Fig. 5, and comprising a restraining arm, here in the shape of a leaf spring 14 and a rubber cushion 15 which are fixed to the bellows 13, but not to the arm 3. The leaf spring 14 is clamped together with the arm 3 on the axle 5. Figs. 1 - 4 show two separate rubber cushions 15.

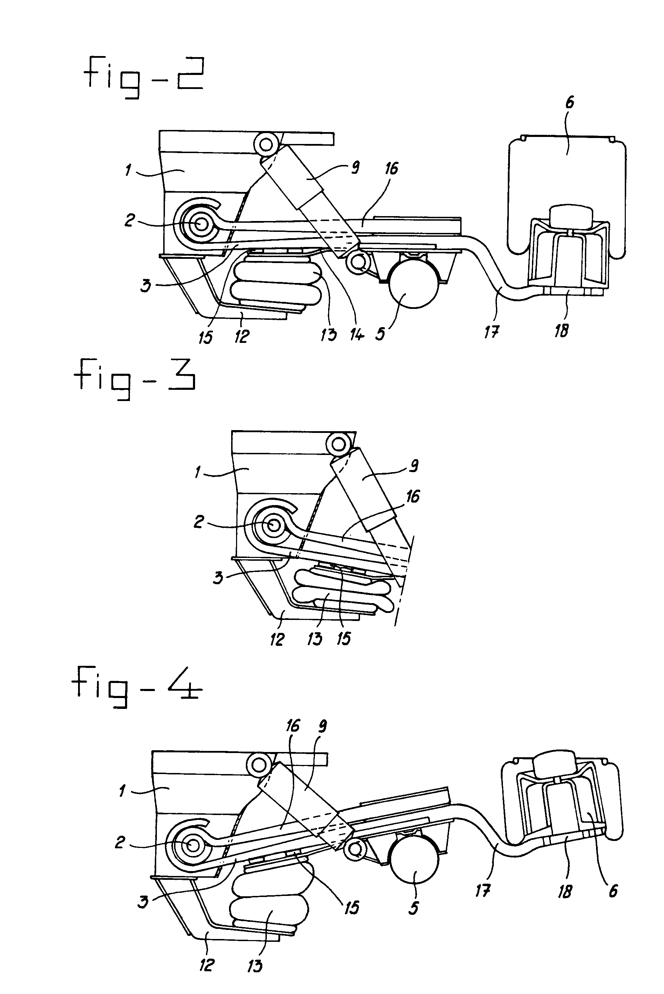

In Figs. 2 - 4 the bearing arm between spring carrier bracket 1, 2 and axle 5 is made double, namely comprising two arms 3 and 16 one above the other. Here the bottom arm 3 runs on past the axle 5, and passes into a part 17 which is curved downwards and then slightly upwards again, and which ends in a platform 18, on which the gas spring bellows 6 for the spring suspension of the axle 5 is fitted. The means for clamping the arms 3 and 16 on the top of the axle are not shown in detail here. Here again a leaf spring 14 is fitted between bellows and axle.

The supporting arm 12 here also bears a gas spring bellows 13 for the axle lift, with means 14 and 15 thereon as shown in Fig. 1, and as detailed in Fig. 5.

In Fig. 5 a round metal cover plate 19 of the gas bellows 13 for the axle lifting can be seen, which plate has threaded recesses 20 in the known manner. Such a plate 19 is firmly connected in a known manner to the bellows 13. The leaf spring 14, shown only partially, has in its platform part 25, which has to be fixed on the lifting bellows 13, two through holes, coinciding with the recesses 20. The rubber cushion 15 has a metal bottom plate 21, firmly bonded to the rubber, with two holes 22 in which the head of a bolt 23 fits, in such a way that its top face comes to rest at some distance below the top face of the rubber cushion 15. The bottom plate 21 has two holes of smaller diameter than the holes 22 which allow through the shanks of the bolts 23, but on which the bolt heads can rest with their bottom face for securing the cushion 15 on the leaf spring 14 and for securing these parts together on the cover plate 19 of the bellows 13, by screwing the bolts 23 into the threaded recesses of said plate.

In this way the top side of the bellows 13 is held sufficiently in place, while the bearing arm 3 and its surface are spared, since only the rubber of the cushion 15 comes into contact therewith.

However, the top end of the bellows 13, thus the cover plate 19, could also be slidably connected thereto with, for example, straps around the bearing arm 3, but the embodiment shown is preferable, in particular if said arm also has to act as a leaf spring and thus must be able to deform.

Another very advantageous embodiment of the means for holding the top end of the lifting bellows 13 in place is shown by dotted lines in Fig. 1 and, instead of the leaf spring 14, has a rigid arm 24 which at one side runs along one side of the spring carrier bracket 1 and engages hingedly on the outside end of the pivot pin 2 for the bearing arm 3. The platform 25 (Fig. 5) is now in the form of a part projecting laterally from said arm 24.

No residual pressure is then needed in the lifting bellows during driving with unlifted axle, and the cushion 15 then remains free from the bearing arm 3.

Fig. 2 shows the device according to the second example of an embodiment in the central position during ordinary driving. Some gas (air) pressure is preferably then still maintained in bellows 13, for example of 0.5 bar, in order to keep the bellows 13 in shape and not to overload the leaf spring 14. With maximum outward (downward) spring deviation of the axle, thus with maximum length of the spring bellows 6, the parts are in the position shown in Fig. 3, and the lifting bellows 13 is compressed to the maximum degree. During the axle lifting the spring bellows 6 is released and the lifting bellows 13 is put under higher gas pressure, so that it lifts the axle 5 and compresses the spring bellows 6 to the position of Fig. 4.

Essentially the same applies to the embodiment of Fig. 1.

If there is a sufficiently rigid unit, formed by the axle 5 and the bearing arm 3 on both sides, one such support 12 with bellows 13, at one side of the vehicle, will be sufficient to lift the axle parallel to itself, also, of course, with released bellows 6.

## Claims

1. Axle lifting device for a vehicle, having a bearing arm (3) for the axle running from a spring carrier bracket (1) to the axle (5) and a gas spring system (6) between axle (5) or bearing arm (3) and frame, in which a fixed support (12) is fitted under said bearing arm (3) on the spring carrier bracket (1), on which support (12) a gas bellows (13) is arranged, which at the other side presses from below onto the bearing arm (3) or a part firmly fixed thereto, in order to lift the axle (5) when gas pressure is supplied to said gas bellows (13) and the above-mentioned gas spring system (6) is released, **characterized** **in that** there is a restraining arm (14,24) connecting the upper end of the gas bellows (13) to the bearing arm (3), the axle (5) or the spring carrier bracket (1) in a point at a horizontal distance from said bellows (13) so as to allow extension of the gas bellows (13) while limiting horizontal movements of the upper end of the gas bellows (13).

2. Axle lifting device according to Claim 1, in which a rigid plate (19,21,25) forming the top face of said gas bellows (13) bears one or more elastic pads (15) by means of which the gas bellows (13) pushes from below onto the bearing arm (3), said restraining arm (14) being rigidly connected to or forming part of said rigid plate (19,21,25).

3. Axle lifting device according Claim 1 or 2, in which said restraining arm (14) is a leaf spring which is connected to the bearing arm (3) or the axle (5) so as to be free to move freely over some distance between said bellows (13) and said connection.

4. Axle lifting device according to Claim 1, in which said restraining arm (24) is hingedly connected to the spring carrier bracket (1).

5. Axle lifting device according to Claim 4, in which said restraining arm (24) is fitted so that it pivots about the same pivot axis (2) as the bearing arm (3) in the spring carrier bracket (1).

6. Axle lifting device according to Claim 4 or 5, in which said restraining arm (24) has a part which runs outside of and at one side along the spring carrier bracket (1) towards said pivoted joint (2) to the spring carrier bracket and at the gas bellows (13) end passes into a platform (25) on said arm (24) secured on the bellows (13) and projecting laterally from said part extending along the bracket (1).

## Patentansprüche

1. Achshebevorrichtung für ein Fahrzeug, mit einem sich von einem Federaufnahmebock (1) zu einer Achse (5) erstreckenden Tragarm (3) für die Achse und mit einem Gasfedersystem (6) zwischen Achse (5) oder Tragarm (3) und Rahmen, wobei unter dem Tragarm (3) an dem Federaufnahmebock (1) eine Halterung (12) ortsfest angeordnet ist, auf der ein Gasfaltenbalg (13) vorgesehen ist, der auf der anderen Seite von unten gegen den Tragarm (3) oder ein fest daran angebrachtes Teil drückt, um die Achse (5) anzuheben, wenn der Gasfaltenbalg (13) mit Gasdruck beaufschlagt und das obengenannte Gasfedersystem (6) entspannt ist, **gekennzeichnet** durch einen Haltearm (14, 24), der das obere Ende des Gasfaltenbalgs (13) mit dem Tragarm (3), der Achse (5) oder dem Federaufnahmebock (1) an einem von dem Faltenbalg (13) horizontal beabstandeten Punkt verbindet, um die Ausdehnung des Gasfaltenbalgs bei gleichzeitiger Beschränkung von horizontalen Bewegungen des oberen Endes des Gasfaltenbalgs (13) zuzulassen.

2. Achshebevorrichtung nach Anspruch 1, bei der eine die Oberseite des Gasfaltenbalgs (13) bildende starre Platte (19, 21, 25) ein oder mehrere elastische Polster (15) trägt, über die der Gasfaltenbalg (13) von unten gegen den Tragarm (3) drückt, wobei der Haltearm (14) starr mit der starren Platte (19, 21, 25) verbunden ist oder einen Teil dieser Platte bildet.

3. Achshebevorrichtung nach Anspruch 1 oder 2, bei der der Haltearm (14) eine Blattfeder ist, die mit dem Tragarm (3) oder der Achse (5) so verbunden ist, daß sie sich über eine gewisse Strecke frei zwischen dem Faltenbalg (13) und der Verbindung bewegen kann.

4. Achshebevorrichtung nach Anspruch 1, bei der der Haltearm (24) schwenkbar an dem Federaufnahmebock (1) angelenkt ist.

5. Achshebevorrichtung nach Anspruch 4, bei der der Haltearm (24) so befestigt ist, daß er sich um dieselbe Drehachse (2) wie der Tragarm (3) in dem Federaufnahmebock (1) dreht.

6. Achshebevorrichtung nach Anspruch 4 oder 5, bei der der Haltearm (24) einen Abschnitt aufweist, der außerhalb von und an einer Seite entlang des Federaufnahmebocks (1) in Richtung der genannten drehbaren Verbindung (2) zu dem Federaufnahmebock verläuft und am Ende des Gasfaltenbalgs (13) auf dem Arm (24) in eine Abflachung (25) übergeht, die an dem Faltenbalg (13) festgelegt ist und sich lateral von diesem Teil entlang dem Bock (1) erstreckt.

## Revendications

1. Dispositif de levage d'essieu pour un véhicule, présentant un bras porteur (3) pour l'essieu s'étendant d'une console d'appui de ressort (1) à l'essieu (5) et un système de ressorts à gaz (6) entre l'essieu (5) ou le bras porteur (3) et le châssis, dans lequel un support fixe (12) est monté, sous ledit bras porteur (3), sur la console d'appui de ressort (1), support (12) sur lequel est disposé un soufflet à gaz (13) qui, de l'autre côté, appuie du bas sur le bras porteur (3) ou une pièce fermement fixée à celui-ci, afin de lever l'essieu (5) lorsqu'une pression de gaz est appliquée sur ledit soufflet à gaz (13) et que le système de ressorts à gaz (6) précité est détendu, caractérisé en ce qu'il y a un bras de retenue (14, 24) reliant l'extrémité supérieure du soufflet à gaz (13) au bras porteur (3), à l'essieu (5) ou à la console d'appui de ressort (1) à un point à une distance horizontale dudit soufflet (13), de manière à permettre la dilatation du soufflet à gaz (13) tout en limitant les décplacements horizontaux de l'extrémité supérieure du soufflet à gaz (13).

2. Dispositif de levage d'essieu suivant la revendication 1, dans lequel une plaque rigide (19, 21, 25) formant la surface supérieure dudit soufflet à gaz (13) porte un ou plusieurs tampons élastiques (15) à l'aide desquels le soufflet à gaz (13) pousse du bas sur le bras porteur (3), ledit bras de retenue (14) étant rigidement connecté à ladite plaque rigide (19, 21, 25) ou formant partie de celle-ci.

3. Dispositif de levage d'essieu suivant la revendication 1 ou 2, dans lequel ledit bras de retenue (14) est un ressort à lames qui est connecté au bras porteur (3) ou à l'essieu (5) de manière à pouvoir se déplacer librement sur une certaine distance entre ledit soufflet (13) et ladite connexion.

4. Dispositif de levage d'essieu suivant la revendication 1, dans lequel ledit bras de retenue (24) est connecté de manière articulée à la console d'appui de ressort (1).

5. Dispositif de levage d'essieu suivant la revendication 4, dans lequel ledit bras de retenue (24) est monté de manière à pivoter sur le même axe de pivotement (2) que le bras porteur (3) dans la console d'appui de ressort (1).

6. Dispositif de levage d'essieu suivant la revendication 4 ou 5, dans lequel ledit bras de retenue (24) présente une partie qui s'étend à l'extérieur de et, d'un côté, le long de la console d'appui de ressort (1), vers ladite connexion pivotée (2) à la console d'appui de ressort et pres du soufflet à gaz (13) passe dans une plate-forme (25) sur ledit bras (24) fixé au soufflet (13) et en saillie latérale par rapport à ladite partie s'étendant le long de la console (1).
